# FASCICULE DE BREVET EUROPEEN

(11) **EP 2 545 685 B1**
(45) Date de publication et mention de la délivrance du brevet: **01.01.2014**
(21) Numéro de dépôt: 11712970.0
(22) Date de dépôt: 04.03.2011
(51) Int. Cl.: H04L 12/801

(54) **PROCEDES DE TRANSMISSION ET DE RECEPTION DE DONNEES UTILISANT UNE PLURALITE DE CANAUX RADIOFREQUENCE, EQUIPEMENTS DE TRANSMISSION ET DESTINATAIRE, SIGNAL ET PROGRAMME D'ORDINATEUR CORRESPONDANTS**
VERFAHREN ZUM SENDEN UND EMPFANGEN VON DATEN MIT MEHREREN FUNKKANÄLEN, ÜBERTRAGUNGSVORRICHTUNGEN UND ENTSPRECHENDER EMPFÄNGER, SIGNAL UND COMPUTERPROGRAMM
METHODS FOR TRANSMITTING AND RECEIVING DATA USING A PLURALITY OF RADIO CHANNELS, TRANSMISSION DEVICES AND CORRESPONDING RECIPIENT, SIGNAL AND COMPUTER PROGRAM

(30) Priorité: 08.03.2010 FR 1051670
(43) Date de publication de la demande: 16.01.2013
(73) Titulaire: Orange, 75015 Paris (FR)
(72) Inventeur: CARIOU, Laurent, F-35000 Rennes (FR); CHRISTIN, Philippe, F-35000 Rennes (FR); REDIETEAB, Getachew, 35150 Janze (FR)
(74) Mandataire: Guy, Marion
(86) Numéro de dépôt international: PCT/FR2011/050457
(87) Numéro de publication internationale: WO 2011/110779

(56) Documents cités:
- EP-A2- 1 775 885
- US-A1- 2005 152 358

## Description

### 1. Domaine de l'invention

Le domaine de l'invention est celui des communications sur des canaux radiofréquence.

L'invention concerne la transmission de paquets de données dans des bandes de fréquence situées autour de 2,4GHz ou de 5GHz, dans lesquelles fonctionnent notamment des équipements selon la norme IEEE 802.11 ou ses versions révisées, encore appelée norme Wifi. En particulier, l'invention concerne la transmission de paquets de données selon la norme IEEE 802.1 In et ses versions à venir, et notamment les versions 802.11ac et 802.1 lad.

On entend ici par équipement un élément appartenant à un ensemble de services de base (en anglais BSS pour « basic service set »), formé par un point d'accès (en anglais AP pour « access point ») et les stations associées à ce point d'accès, c'est-à-dire les stations situées dans la zone de couverture de ce point d'accès.

### 2. Art antérieur

La norme Wifi s'attache à définir les couches basses du modèle OSI (en anglais « Open Systems Interconnection » pour « interconnexion de systèmes ouverts »). Ces couches comprennent une couche physique appelée PHY et deux sous-couches relatives à la couche liaison de données du modèle OSI :
- une couche de contrôle de la liaison logique ou LLC (en anglais « Logical Link Control ») et
- une couche de contrôle d'accès au support ou MAC (en anglais « Media Access Control »).

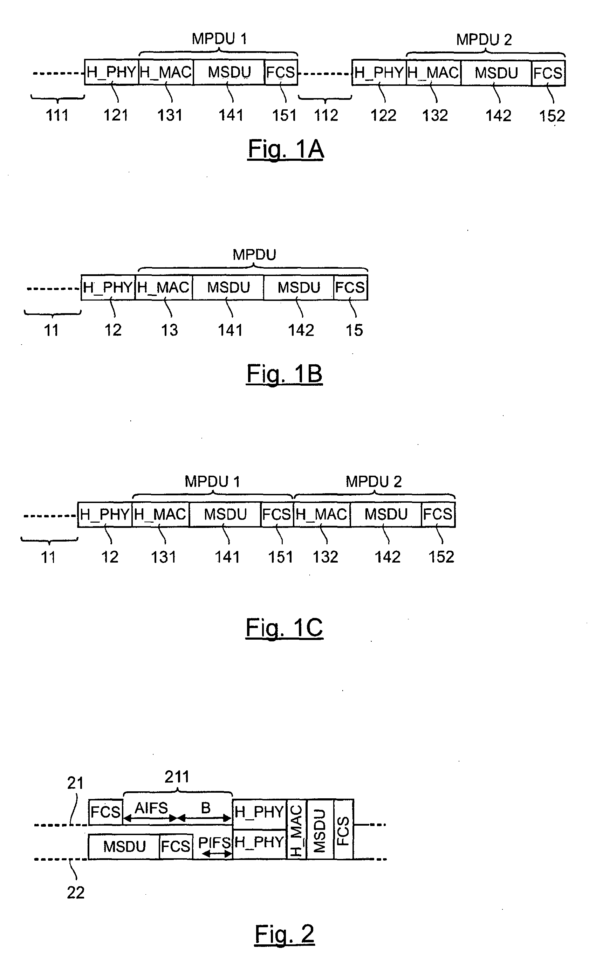

Selon la version 802.11n de la norme Wifi, il est possible d'agréger plusieurs paquets de données au niveau de la couche MAC, en groupant certaines informations associées à ces paquets de données. La transmission d'informations groupées permet ainsi d'augmenter l'efficacité du transfert des informations utiles. Ce mécanisme d'agrégation est par exemple illustré en figures 1B et 1C, par rapport à une transmission sans agrégation de paquets de données, illustrée en figure 1A.

Ainsi, si aucun mécanisme d'agrégation n'est mis en oeuvre, les données sont échangées entre les différents équipements du BSS de la manière suivante :
- acquisition du canal 111 ;
- transmission d'une trame formée d'un premier entête PHY, noté H_PHY 121, et d'un premier paquet de données MPDU1 (en anglais « MAC Protocol Data Unit » pour « Unité de données protocolaires MAC ») comprenant :
   - un entête MAC, noté H_MAC 131 ;
   - une unité de données de service MAC (en anglais « MAC Service Data Unit »), notée MSDU 141 ;
   - une séquence de contrôle d'intégrité de trame (en anglais « Frame Check Séquence »), notée FCS 151 ;
- acquisition du canal 112 ;
- transmission d'une trame formée d'un deuxième entête PHY, noté H_PHY 122, et d'un deuxième paquet de données MPDU2 comprenant :
   - un entête MAC, noté H_MAC 132 ;
   - une unité de données de service MAC, notée MSDU 142 ;
   - une séquence de contrôle d'intégrité de trame, notée FCS 152 ;
- etc.

Si la transmission met en oeuvre une agrégation de type A-MSDU (en anglais « Aggregated MAC Service Data Unit » pour « Unités de données de service MAC agrégées »), comme illustré en figure 1B, les paquets de données venant de la couche de niveau 3 du modèle OSI sont agrégés dans un unique paquet de données MPDU. Les données sont donc échangées entre les différents équipements du BSS de la manière suivante :
- acquisition du canal 11 ;
- transmission d'une trame formée d'un entête PHY, noté H_PHY 12, et d'un paquet de données MPDU comprenant :
   - un entête MAC, noté H_MAC 13 ;
   - deux unités de données de service MAC, notées MSDU 141 et 142 ;
   - une séquence de contrôle d'intégrité de trame, notée FCS 15.

Si la transmission met en oeuvre une agrégation de type A-MPDU (en anglais « Aggregated MAC Protocol Data Unit » pour « Unités de données protocolaires MAC agrégées »), comme illustré en figure 1C, on utilise un même entête PHY pour transmettre plusieurs paquets de données adressés à un même équipement :
- acquisition du canal 11 ;
- transmission d'une trame formée d'un entête PHY, noté H_PHY 12, et d'un paquet agrégé A-MDPU formé de deux paquets de données MPDU1 et MPDU2 comprenant chacun :
   - un entête MAC, noté H_MAC 131, respectivement H_MAC 132 ;
   - une unité de données de service MAC, notée MSDU 141, respectivement MSDU 142 ;
   - une séquence de contrôle d'intégrité de trame, notée FCS 151, respectivement FCS 152.

L'agrégation permet ainsi de mutualiser l'acquisition du canal, l'entête PHY, ou l'entête MAC, ou encore de faire différentes combinaisons.

En particulier, l'agrégation de type A-MPDU permet de mutualiser les informations de la couche PHY (entête H_PHY 12 de la figure 1C) tout en particularisant le contrôle d'intégrité de chaque paquet de données (FCS 151 et FCS 152 de la figure 1C). Chaque paquet de données (MPDU1, MPDU2) comprend donc son propre entête MAC (H_MAC 131, H_MAC 132) et sa propre séquence de contrôle d'intégrité (FCS 151, FCS 152).

Cette mutualisation de l'entête PHY et cette différentiation des paquets de données MPDU offrent un bon compromis. En effet, si le canal de transmission évolue beaucoup par rapport à ce que l'entête PHY permet de déterminer, seuls les derniers paquets de données MPDU seront perdus, en raison de l'écart entre les coefficients estimés et réels du canal. Et bien que le canal 802.11 présente des variations relativement lentes, cette situation risque de se produire d'autant plus souvent que la taille des trames portant les paquets agrégés A-MPDU est grande.

Les gains en débit obtenus grâce à cette technique d'agrégation de type A-MPDU justifient cependant amplement son utilisation.

Par ailleurs, les exigences en débit MAC étant de plus en plus élevées, la bande de fréquence utilisée pour les transmissions dans un réseau Wifi a été augmentée, en concaténant plusieurs canaux radiofréquence au niveau de la couche PHY.

Ainsi, les normes Wifi 802.11a, b, g proposent d'utiliser des bandes de fréquence de 20MHz, tandis que la norme Wifi 802.1 In propose d'utiliser une bande de fréquence de 40MHz (où une bande de 40MHz correspond à une concaténation de deux canaux radiofréquence sans recouvrement de 20MHz). Les normes en cours de standardisation proposent de concaténer jusqu'à quatre canaux de 20MHz ou 40MHz (adjacents ou disjoints), pour permettre une transmission de données sur une bande encore plus large, par exemple de 80MHz.

La figure 2 présente un exemple de transmission de données sur un canal concaténé formé d'un canal primaire 21 et d'un canal secondaire 22, selon la norme 802.11n.

Pour assurer une transmission sur une pluralité de canaux, le mode d'accès CSMA-CA (en anglais « Carrier Sense Multiple Access-Collision Avoidance »), tel que décrit dans la norme 802.11-2007, paragraphe 9.1 « *MAC architecture* », 9.1.1 *« DCF* », est mis en oeuvre sur le canal primaire 21. Ce mécanisme CSMA-CA assure un partage de l'accès à un canal radiofréquence selon un principe dit de contention : chaque équipement doit écouter que le canal est libre (c'est-à-dire qu'aucun signal n'est émis/reçu dans ce canal) pendant une durée variable, correspondant à une durée AIFS (en anglais « Arbitrary Inter Frame Space », en français « Intertrame pour accès arbitraire ») et une durée d'attente aléatoire (notée B pour « Backoff » en anglais), avant de transmettre des données. Cette phase d'écoute (basé sur le mécanisme couche physique appelé « CCA », « Clear Channel Assessment » en anglais) permet d'avoir accès au canal primaire (acquisition du canal 211) et est donc mise en oeuvre uniquement sur le canal primaire 21.

Sur le canal secondaire 22, il n'est effectué qu'une vérification de non-occupation pendant une durée spécifique notée « PIFS » (pour « PCF Inter-Frame Spacing » en anglais, « Intertrame pour accès contrôlé » en français), variant entre vingt-cinq et trente-six microsecondes selon la norme IEEE 802.11n, en utilisant notamment le mécanisme CCA. Le canal secondaire 22 est préempté après la durée PIFS (si aucun échange n'est détecté pendant cette durée), ce qui signifie qu'un équipement qui a besoin des canaux primaire 21 et secondaire 22 pour émettre sur une bande de fréquence plus large accèdera de manière prioritaire au canal secondaire 22 si le canal primaire 21 est libre (du fait que la durée PIFS est inférieure à la durée d'acquisition du canal primaire 21).

Il est ainsi possible de transmettre des paquets de données sur une bande de fréquence plus large, correspondant à la concaténation des canaux primaire 21 et secondaire 22 (au niveau de la couche PHY).

Cette technique de concaténation des canaux, qui augmente considérablement la bande disponible, permet d'obtenir des débits de transmission très élevés, en particulier lorsqu'elle est combinée à une agrégation de type A-MPDU mise en oeuvre au niveau de la couche MAC.

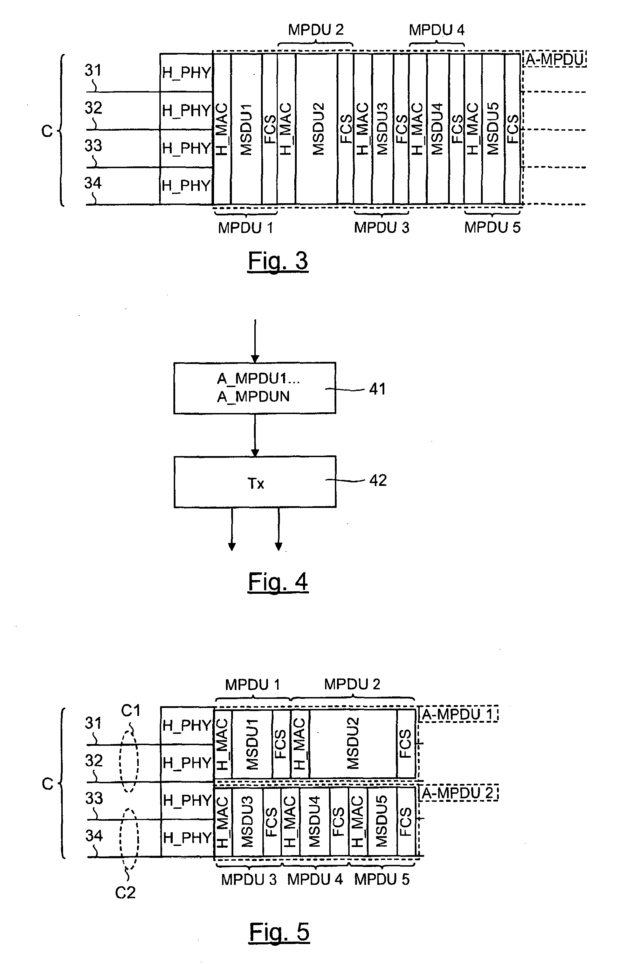

La figure 3 illustre plus précisément ce mécanisme d'agrégation de type A-MPDU mis en oeuvre sur un canal concaténé C formé de quatre canaux radiofréquence présentant chacun une largeur de bande de 20MHz, notés canal primaire 31, canal secondaire 32, canal tertiaire 33, et canal quaternaire 34. Comme décrit précédemment en relation avec la figure 2, l'acquisition du canal est mise en oeuvre uniquement sur le canal primaire 31 lorsque plusieurs canaux sont concaténés. Les autres canaux 32, 33 et 34 sont préemptés.

Les paquets de données MPDU 1 à MPDU5 de la figure 3, comprenant chacun un entête MAC (noté H_MAC), une unité de données de service MAC (notées MSDU1 à MSDU5), et une séquence de contrôle d'intégrité de trame (notée FCS), forment un paquet agrégé A-MPDU. Ces paquets de données MPDU 1 à MPDU5 sont étalés sur l'ensemble des canaux radiofréquence du canal concaténé C.

Comme déjà décrit, on utilise un même entête PHY pour transmettre plusieurs paquets de données adressés à un même équipement. L'entête PHY (noté H_PHY) est donc dupliqué sur les différents canaux radiofréquence 31 à 34, et envoyé de manière synchrone. Il n'y a donc pas d'étalement de cette information. De cette manière, les équipements utilisant les canaux non primaires peuvent connaître la longueur de la trame sans avoir besoin de considérer tous les canaux radiofréquence. La réception ne peut se faire correctement que si l'entête PHY a bien été reçu.

La trame formée des entêtes H_PHY et du paquet agrégé A-MPDU est alors émise sur le canal concaténé C.

En plus de conférer des débits de transmission très élevés, la concaténation des canaux radiofréquence combinée à la mise en oeuvre d'une agrégation de type A-MPDU permet de limiter les erreurs de transmission. En effet, comme illustré en figure 3, les paquets de données étalés sur l'ensemble des canaux radiofréquence du canal concaténé C durent moins longtemps (en terme de temps de transmission) et sont donc plus résistants aux variations du canal.

Malheureusement, la concaténation de canaux radiofréquence présente également des inconvénients.

En effet, la probabilité d'avoir une collision de paquets de données après une phase de contention réussie dépend non seulement du nombre de stations de l'ensemble de services de base (BSS), mais également du trafic et de la distance séparant un point d'accès des stations qui lui sont associées. Cette probabilité de collision n'est donc pas négligeable lorsque l'on utilise une pluralité de canaux radiofréquence. En effet, il est possible qu'un équipement du BSS émettant dans un seul canal radiofréquence (canal principal ou autre canal) obtienne une durée d'attente B finissant au moment même que la durée d'attente affectée à un équipement émettant dans plusieurs canaux radiofréquence. Les deux équipements considèrent alors que le canal radiofréquence est libre et émettent simultanément des données, ce qui conduit à une collision des paquets de données. Il s'agit ici d'une faille du mécanisme CSMA/CA.

Le problème des stations cachées est également responsable de nombreuses collisions. On rappelle que, par définition, toutes les stations sont à portée du point d'accès (AP) qui fédère le BSS. Par contre, toutes les stations ne sont pas forcément à portée les unes des autres. Il se peut donc qu'une station transmette des données vers l'AP (tout en respectant parfaitement tous les mécanismes imposés) alors qu'une autre station, qui lui est hors de portée, est déjà en train de transmettre des données vers l'AP. L'AP perd donc les données issues des deux stations, du fait du brouillage induit par la première station, dite alors « cachée ».

De plus, quand on étend la bande utilisée, la probabilité de collision (après acquisition réussie des canaux désirés) est doublée, triplée, voire quadruplée en fonction du nombre de canaux radiofréquence sur lesquels s'étend la trame. Il y a donc un risque élevé de collision.

Par ailleurs, même en utilisant un mécanisme d'agrégation de type A-MPDU, une seule collision sur un des canaux radiofréquence peut entraîner la perte de la totalité de la trame, puisque que tous les entêtes seront corrompus. Si l'effet de la collision est trop important pour être corrigé par les mécanismes de la couche PHY, les paquets de données seront mal démodulés et la vérification d'intégrité rendra un résultat négatif. Il faudra donc transmettre à nouveau les paquets de données, ce qui est consommateur en bande passante et diminue l'efficacité du système. Un autre example de l'art antérieur se trouve dans D1.

Il existe donc un besoin pour une nouvelle technique de transmission sur des canaux multiples utilisant un mécanisme d'agrégation des paquets de données, permettant de limiter le risque de collisions.

### 3. Exposé de l'invention

L'invention propose une solution nouvelle qui ne présente pas l'ensemble de ces inconvénients de l'art antérieur, sous la forme d'un procédé de transmission de paquets de données dans un réseau de communication utilisant une pluralité de canaux radiofréquence, ledit réseau de communication étant organisé en une pluralité de couches de communication comprenant une couche liaison de données, dite couche MAC, et une couche physique, dite couche PHY. Un tel procédé met en oeuvre, au niveau de la couche MAC, une étape d'agrégation de paquets de données à transmettre vers un même destinataire, délivrant au moins deux paquets agrégés, auxquels est associé un entête unique de la couche PHY. De plus, au moins deux des canaux radiofréquence sont concaténés pour former un canal concaténé.

Selon l'invention, un tel procédé met en oeuvre une étape d'émission simultanée desdits au moins deux paquets agrégés respectivement sur au moins deux sous-canaux concaténés distincts, un sous-canal concaténé étant formé par au moins un des canaux radiofréquence du canal concaténé.

L'invention propose ainsi une approche nouvelle et inventive de la transmission de paquets agrégés sur une bande de fréquence plus large, correspondant à la concaténation de plusieurs canaux radiofréquence (transmission multicanaux ou « multichannel » en anglais). Par exemple, un canal concaténé est composé de quatre canaux radiofréquence de 20 MHz, permettant ainsi une transmission sur une bande de 80 MHz.

Selon l'invention, chaque paquet agrégé est transmis dans un sous-canal concaténé distinct. Ainsi, les paquets de données formant un paquet agrégé ne sont pas étalés sur l'ensemble des canaux radiofréquence formant un canal concaténé, mais uniquement sur un sous-ensemble de canaux radiofréquence, appelé sous-canal concaténé.

En d'autres termes, l'invention propose :
- de modifier l'agrégation en couche MAC en prenant en compte un paramètre N correspondant au nombre de sous-canaux concaténés, afin de fournir N paquets agrégés au lieu d'un seul paquet agrégé,
- de modifier la couche PHY afin de transmettre ces N paquets agrégés simultanément sur l'ensemble de la bande de fréquence disponible (correspondant au canal concaténé).

En étalant l'agrégation sur un sous-ensemble de canaux radiofréquence du canal concaténé, cette technique permet de réduire l'impact d'une collision, et ainsi augmenter l'efficacité de transfert PHY-MAC.

En effet, si au lieu d'avoir des paquets de données étalés sur tous les canaux radiofréquence du canal concaténé (on étale par exemple cinq paquets de données sur l'ensemble des canaux radiofréquence du canal concaténé, comme illustré en figure 3), on étale ces paquets de données sur au moins deux sous-ensembles de canaux radiofréquence (on étale par exemple deux paquets de données sur un premier sous-canal concaténé, deux autres paquets de données sur un deuxième sous-canal concaténé, un autre paquet de données sur un troisième sous-canal concaténé, etc), les paquets agrégés obtenus après agrégation de ces paquets de données sont cloisonnés à ces sous-canaux concaténés, et on diminue donc le nombre de retransmissions liées aux collisions.

De plus, l'utilisation de sous-canaux concaténés permet, au niveau de la couche PHY, une parallélisation du traitement du signal.

En particulier, l'invention concerne les agrégations de type A-MPDU. On agrège donc zéro, un ou plusieurs paquets de données MPDU pour former un paquet agrégé A-MPDU.

Selon un aspect particulier, l'entête unique de la couche PHY est transmis de façon synchrone sur chacun des canaux radiofréquence formant le canal concaténé, préalablement à l'étape d'émission.

On utilise ainsi un même entête PHY pour transmettre plusieurs paquets de données adressés à un même équipement. L'entête PHY est donc dupliqué sur tous les canaux radiofréquence formant le canal concaténé, et envoyé de manière synchrone.

Selon un mode de réalisation particulier, le procédé de transmission comprend une étape de signalisation de l'émission simultanée des paquets agrégés sur les sous-canaux concaténés.

Cette étape de signalisation permet d'insérer un nouvel indicateur dans un champ de signalisation, ou de modifier un champ de signalisation existant, pour informer un équipement destinataire d'une transmission sur des sous-canaux concaténés. De cette façon, l'équipement destinataire sait quels sous-canaux concaténés il doit écouter pour décoder correctement les informations transmises. Un tel indicateur peut être inséré/modifié dans l'entête de la couche PHY, ou encore inséré dans une balise émise par un équipement (point d'accès) d'un ensemble de service de base BSS.

En particulier, l'étape de signalisation signale au moins une des informations suivantes :
- nombre de sous-canaux concaténés dans le canal concaténé (correspondant au nombre de paquets agrégés à transmettre sur le canal concaténé) ;
- canaux radiofréquence formant chacun des sous-canaux concaténés ;
- nombre de canaux radiofréquence occupés par chaque paquet agrégé ;
- type d'agrégation mis en oeuvre (agrégation classique, encore appelée agrégation
   « verticale », ou agrégation selon l'invention, encore appelée agrégation « horizontale »).

Il est ainsi possible d'insérer un ou plusieurs indicateurs, ou de modifier un ou plusieurs indicateurs existants.

Selon une caractéristique particulière de l'invention, le procédé de transmission comprend une étape d'insertion d'une séquence de bourrage après le dernier paquet de données d'au moins un paquet agrégé (ou après un délimiteur de fin de paquet d'au moins un paquet agrégé), de façon que chaque paquet agrégé émis lors de l'étape d'émission présente une longueur identique.

De cette façon, chaque sous-canal concaténé émet une séquence de même longueur, et tous les canaux radiofréquence du canal concaténé sont libérés au même moment pour une autre transmission.

En particulier, la longueur d'un paquet agrégé A-MPDU peut être codée dans un champ de l'entête PHY (champ LENGTH en octets). Par défaut, on affecte à ce champ la valeur du paquet agrégé le plus grand (i.e. associé au plus grand nombre de symboles modulés).

Selon un mode de réalisation particulier de l'invention, le procédé de transmission comprend une étape de découpage d'un paquet de données en au moins deux nouveaux paquets de données, dits paquets fragmentés. L'étape d'agrégation répartit alors les paquets fragmentés dans au moins deux paquets agrégés distincts.

Ces paquets fragmentés comprennent chacun un entête MAC, une unité de données de service MAC, et une séquence de contrôle d'intégrité de trame FCS.

De cette façon, une partie du paquet de données d'origine est transmise sur un premier sous-canal concaténé, et au moins une autre partie du paquet de données d'origine est transmise sur un autre sous-canal concaténé.

Cette « fragmentation » des paquets de données permet ainsi de faciliter l'agencement des informations à transmettre. Elle peut notamment être mise en oeuvre pour obtenir des paquets agrégés de longueur identique, tout en limitant la taille des séquences de bourrage introduites dans les autres paquets agrégés. Cette fragmentation permet donc de limiter la transmission d'informations inutiles comme les séquences de bourrage (« padding »). De plus, les paquets fragmentés peuvent être renvoyés de manière indépendante en cas de collision, puisqu'ils comprennent chacun un entête MAC et une séquence de contrôle d'intégrité.

Dans un autre mode de réalisation, l'invention concerne un équipement de transmission de paquets de données dans un réseau de communication tel que défini précédemment. Un tel équipement comprend des moyens d'agrégation de paquets de données à transmettre vers un même destinataire, mis en oeuvre au niveau de la couche MAC, délivrant au moins deux paquets agrégés auxquels est associé un unique entête de la couche PHY.

Selon l'invention, un tel équipement de transmission comprend également des moyens d'émission simultanée desdits au moins deux paquets agrégés respectivement sur au moins deux sous-canaux concaténés distincts, un sous-canal concaténé étant formé par au moins un des canaux radiofréquence du canal concaténé.

Un tel équipement est notamment adapté à mettre en oeuvre le procédé de transmission décrit précédemment. Il s'agit par exemple d'un point d'accès ou d'une station d'un ensemble de services de base, dans le cas d'un réseau Wifi.

Cet équipement pourra bien sûr comporter les différentes caractéristiques relatives au procédé de transmission selon l'invention. Ainsi, les caractéristiques et avantages de cet équipement sont les mêmes que ceux du procédé de transmission, et ne sont pas détaillés plus amplement.

En particulier, les moyens d'émission d'un tel équipement comprennent un ensemble de modules de transmission spécifiques à chaque sous-canal concaténé, un ensemble comprenant au moins les modules suivants : embrouilleur (« srcambler » en anglais), codeur canal, entrelaceur, codeur binaire à symbole, module de traitement du signal MIMO (en anglais « Multiple Input Multiple Output »), modulateur OFDM (en anglais « Orthogonal Frequency Division Multiplexing »).

En effet, comme indiqué précédemment, l'utilisation de sous-canaux concaténés permet, au niveau de la couche PHY, une parallélisation du traitement du signal.

Selon un mode de réalisation particulier, au moins un des modules est utilisé pour au moins deux sous-canaux concaténés distincts. En d'autres termes, on mutualise certains modules de la chaîne d'émission qui sont communs aux différents sous-canaux concaténés, comme par exemple : le codeur binaire à symbole, le module de traitement du signal MIMO, ou encore le modulateur OFDM.

L'invention concerne aussi un signal multiporteuse émis dans un réseau de communication utilisant une pluralité de canaux radiofréquence tel que décrit précédemment.

Selon l'invention, le signal transporte :
- des données associées à un paquet agrégé, sur des porteuses appartenant à un premier sous-canal concaténé, et
- des données associées à au moins un paquet agrégé distinct, sur des porteuses appartenant à au moins un deuxième sous-canal concaténé ;
un sous-canal concaténé étant formé par au moins un des canaux radiofréquence du canal concaténé, et
les paquets agrégés, auxquels est associé un entête unique de la couche PHY, résultant d'une agrégation de paquets de données à transmettre vers un même destinataire, mise en oeuvre au niveau de la couche MAC avant émission.

Un tel signal multiporteuse peut être généré selon le procédé de transmission décrit précédemment. Il pourra donc bien sûr comporter les différentes caractéristiques relatives au procédé de transmission décrit précédemment.

Par exemple, un tel signal comprend un champ de signalisation, dans l'entête PHY, portant au moins un indicateur d'une émission simultanée des paquets agrégés respectivement sur au moins deux sous-canaux concaténés distincts.

Par exemple, un tel indicateur appartient au groupe comprenant :
- nombre de sous-canaux concaténés dans le canal concaténé (correspondant au nombre de paquets agrégés à transmettre sur le canal concaténé) ;
- canaux radiofréquence formant chacun des sous-canaux concaténés ;
- nombre de canaux radiofréquence occupés par chaque paquet agrégé ;
- type d'agrégation mis en oeuvre (agrégation classique, encore appelée agrégation
   « verticale », ou agrégation selon l'invention, encore appelée agrégation « horizontale »).

Selon une variante, ce ou ces indicateurs sont présents dans une balise émise par un équipement (point d'accès) du BSS.

L'invention concerne également un procédé de réception de paquets agrégés dans un réseau de communication utilisant une pluralité de canaux radiofréquence, tel que décrit précédemment.

Selon l'invention, un tel procédé met en oeuvre les étapes suivantes :
- réception d'au moins deux paquets agrégés respectivement sur au moins deux sous-canaux concaténés distincts, un sous-canal concaténé étant formé par au moins un des canaux radiofréquence du canal concaténé,
   les paquets agrégés, auxquels est associé un entête unique de la couche PHY, résultant d'une agrégation de paquets de données à transmettre vers un même destinataire, mise en oeuvre au niveau de la couche MAC avant émission ;
- pour au moins un paquet agrégé, extraction du ou des paquets de données formant le paquet agrégé.

Ainsi, le procédé de réception selon l'invention repose sur une approche nouvelle et inventive du traitement des paquets agrégés, lorsque ces paquets agrégés sont émis sur des sous-canaux concaténés distincts.

Un tel procédé de réception est donc apte à décoder des paquets agrégés transmis selon le procédé de transmission décrit précédemment.

En particulier, un tel procédé met en oeuvre une étape de suppression (au niveau MAC) d'au moins une séquence de bourrage insérée après le dernier paquet de données d'au moins un paquet agrégé, préalablement à l'étape d'extraction (et d'interprétation) du ou des paquets de données.

Selon une variante, le procédé de réception met en oeuvre une reconstruction d'un paquet de données à partir de plusieurs paquets fragmentés présents dans des paquets agrégés distincts.

Dans un autre mode de réalisation, l'invention concerne un équipement destinataire destiné à recevoir des paquets agrégés dans un réseau de communication utilisant une pluralité de canaux radiofréquence tel que décrit précédemment.

Un tel équipement comprend :
- des moyens de réception d'au moins deux paquets agrégés respectivement sur au moins deux sous-canaux concaténés distincts, un sous-canal concaténé étant formé par au moins un des canaux radiofréquence du canal concaténé,
   les paquets agrégés, auxquels est associé un entête unique de la couche PHY, résultant d'une agrégation de paquets de données à transmettre vers un même destinataire, mise en oeuvre au niveau de la couche MAC avant émission ;
- pour au moins un paquet agrégé, des moyens d'extraction (et d'interprétation) du ou des paquets de données formant le paquet agrégé.

Un tel équipement est notamment adapté à mettre en oeuvre le procédé de réception décrit précédemment. Il s'agit par exemple d'un point d'accès ou d'une station d'un ensemble de services de base, dans le cas d'un réseau Wifi.

Cet équipement pourra bien sûr comporter les différentes caractéristiques relatives au procédé de réception selon l'invention. Ainsi, les caractéristiques et avantages de cet équipement sont les mêmes que ceux du procédé de réception, et ne sont pas détaillés plus amplement.

En particulier, les moyens de réception d'un tel équipement destinataire comprennent un ensemble de modules de réception spécifiques à chaque sous-canal concaténé, un ensemble comprenant au moins les modules suivants : désembrouilleur (en anglais « descrambler »), décodeur canal, désentrelaceur, égaliseur, détecteur binaire à symbole, détecteur MIMO, démodulateur OFDM.

En effet, comme indiqué précédemment, l'utilisation de sous-canaux concaténés permet, au niveau de la couche PHY, une parallélisation du traitement du signal.

Selon un mode de réalisation particulier, au moins un des modules est utilisé pour au moins deux sous-canaux concaténés distincts. En d'autres termes, on mutualise certains modules de la chaîne de réception qui sont communs aux différents sous-canaux concaténés, comme par exemple : l'égaliseur, le détecteur binaire à symbole, le détecteur MIMO, le démodulateur OFDM.

Un autre aspect de l'invention concerne un programme d'ordinateur comportant des instructions adaptées à la mise en oeuvre du procédé de transmission et/ou du procédé de réception décrits ci-dessus, lorsque le programme est exécuté par un processeur. Un tel programme peut utiliser n'importe quel langage de programmation. Il peut être téléchargé depuis un réseau de communication et/ou enregistré sur un support lisible par ordinateur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1A à 1C illustrent le mécanisme d'agrégation des paquets de données selon l'art antérieur ;
- la figure 2, également présentée en relation avec l'art antérieur, présente un exemple de transmission multicanaux, selon la norme 802.11n ;
- la figure 3 illustre un exemple de transmission multicanaux de paquets agrégés selon l'art antérieur ;
- la figure 4 présente les principales étapes du procédé de transmission selon un mode de réalisation particulier de l'invention ;
- les figures 5 à 7 illustrent des exemples de transmission multicanaux selon l'invention ;
- la figure 8 présente les principales étapes du procédé de réception selon un mode de réalisation particulier de l'invention ;
- les figures 9 et 10 présentent deux exemples de chaînes de transmission selon l'invention.

### 5. Description d'un mode de réalisation de l'invention

### 5.1 Principe général

Le principe général de l'invention repose sur une agrégation spécifique des paquets de données, permettant d'étaler les données sur une partie seulement des canaux radiofréquence formant le canal concaténé. On regroupe de cette façon les paquets de données de façon à émettre simultanément différents paquets agrégés sur plusieurs sous-canaux concaténés, chaque paquet agrégé étant émis dans un sous-canal concaténé distinct.

On entend ici par « canal concaténé » un canal correspondant à la concaténation de plusieurs canaux radiofréquence, utilisé pour une transmission multicanaux. Un tel canal concaténé définit une bande de fréquence plus large pour la transmission de données qu'un simple canal radiofréquence. On entend par « sous-canal concaténé » un unique canal radiofréquence du canal concaténé ou un ensemble de canaux radiofréquence du canal concaténé. On rappelle que ces canaux radiofréquence ne sont pas nécessairement adjacents.

Ce regroupement des paquets de données permet de « cloisonner » les différents sous-canaux concaténés (un paquet agrégé par sous-canal concaténé), ce qui permet de réduire l'impact d'une collision de paquets. En effet, selon l'invention, une collision survenant sur un canal radiofréquence du canal concaténé n'affecte plus l'ensemble des paquets agrégés du canal concaténé, mais uniquement le paquet agrégé émis dans le sous-canal concaténé comprenant ce canal radiofréquence. Il est donc possible de diminuer la quantité de paquets de données à retransmettre en cas de collision, en ne retransmettant que les paquets de données (MPDU) non reçus, ce qui permet de libérer plus rapidement les canaux radiofréquence.

### 5.2 Transmission : principales étapes et exemples de mise en oeuvre

La figure 4 illustre les principales étapes mises en oeuvre par la technique de transmission de paquets de données selon un mode de réalisation de l'invention.

On considère pour ce faire un réseau de communication utilisant une pluralité de canaux radiofréquence, au moins deux des canaux radiofréquence étant concaténés pour former un canal concaténé. Ce réseau est organisé en une pluralité de couches de communication comprenant une couche liaison de données, dite couche MAC, et une couche physique, dite couche PHY.

Plus précisément, cette technique de transmission de paquets de données met en oeuvre les étapes suivantes :
- agrégation (41) de paquets de données à transmettre vers un même destinataire, délivrant au moins deux paquets agrégés auxquels est associé un entête unique de la couche PHY, au niveau de la couche MAC ;
- émission simultanée (42) desdits au moins deux paquets agrégés respectivement sur au moins deux sous-canaux concaténés distincts, , au niveau de la couche PHY.

Ces différentes étapes peuvent être mises en oeuvre de diverses manières, notamment sous forme câblée ou sous forme logicielle.

La figure 5 illustre la mise en oeuvre de cette technique pour une transmission multicanaux selon la norme 802.11n mettant en oeuvre quatre canaux radiofréquence au niveau de la couche PHY et une agrégation de type A-MPDU au niveau de la couche MAC. On reprend ici la configuration de transmission multicanaux illustré en figure 3 en relation avec l'art antérieur.

On considère donc, selon cet exemple, un canal concaténé C formé d'un canal primaire 31, d'un canal secondaire 32, d'un canal tertiaire 33 et d'un canal quaternaire 34. On réalise l'acquisition du canal sur le canal primaire 31. Les autres canaux 32, 33 et 34 sont pré-emptés.

On considère également cinq paquets de données MPDU1 à MPDU5. Chaque paquet de données est formé d'un entête MAC (noté H_MAC), d'une unité de données de service MAC (notées MSDU1 à MSDU5), et d'une séquence de contrôle d'intégrité de trame (notée FCS).

Selon cet exemple, on forme (41) deux paquets agrégés : un premier paquet agrégé noté A-MPDU1 formé des paquets de données MPDU1 et MPDU2, et un deuxième paquet agrégé noté A-MPDU2 formé des paquets de données MPDU3, MPDU4 et MPDU5.

Chaque paquet agrégé est associé à un sous-canal concaténé distinct, sur lequel sont étalés les paquets de données du paquet agrégé. Ainsi, le premier paquet agrégé A-MPDU1 est associé à un premier sous-canal concaténé C1 comprenant les canaux radiofréquence primaire 31 et secondaire 32, et le deuxième paquet agrégé A-MPDU2 est associé à un deuxième sous-canal concaténé C2 comprenant les canaux radiofréquence tertiaire 33 et quaternaire 34.

Les premier et deuxième paquets agrégés A-MPDU1 et A-MPDU2 sont alors émis simultanément (42) sur le sous-canal concaténé qui leur est associé : le premier paquet agrégé A-MPDU1 est émis sur le premier sous-canal concaténé C1 et le deuxième paquet agrégé A-MPDU2 est émis sur le deuxième sous-canal concaténé C2.

De plus, du fait de l'agrégation, l'entête PHY est mutualisé. En d'autres termes, on utilise un même entête PHY pour transmettre plusieurs paquets de données adressés à un même équipement. Cet entête unique de la couche PHY est destiné à être transmis de façon synchrone sur chacun des canaux radiofréquence (31 à 34) du canal concaténé C.

En utilisant deux sous-canaux concaténés distincts C1 et C2 selon ce mode de réalisation de l'invention, on divise pratiquement par deux la probabilité de collision. La technique proposée permet donc de réduire le risque de collision grâce à l'utilisation de sous-ensembles de canaux radiofréquence.

Selon un autre exemple, il est possible qu'un sous-canal concaténé comprenne un unique canal radiofréquence. Dans ce cas, un paquet agrégé A-MPDU est émis sur un unique canal radiofréquence. De la même façon, le nombre de canaux radiofréquence dans les différents sous-canaux concaténés d'un canal concaténé n'est pas nécessairement identique. Ainsi, pour émettre sur une bande de 60MHz, on peut considérer un premier sous-canal concaténé formé de deux canaux radiofréquence de 20MHZ, et un deuxième sous-canal concaténé formé d'un canal radiofréquence de 20MHz.

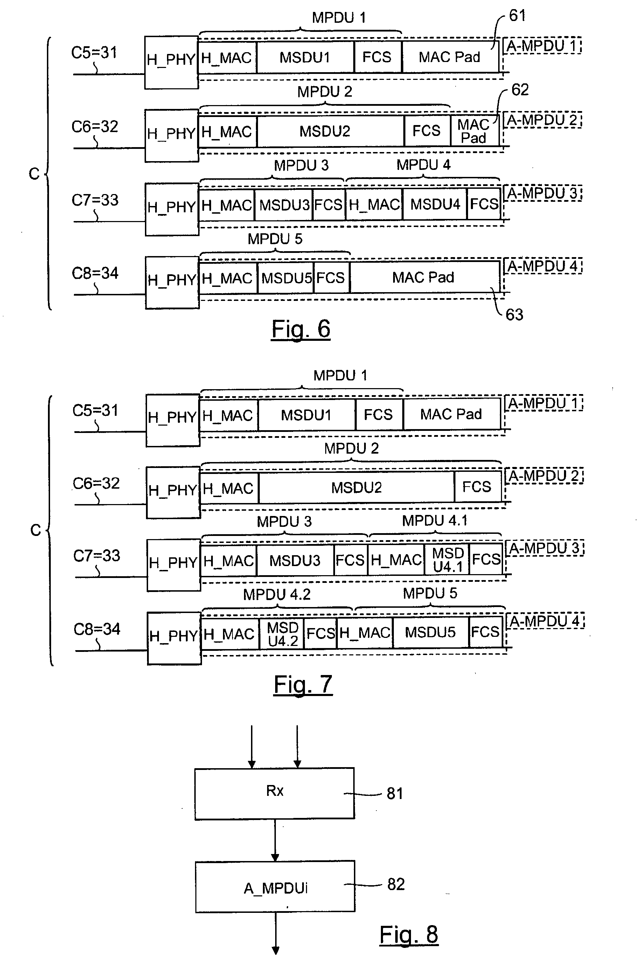

Les figures 6 et 7 illustrent le cas où chaque sous-canal concaténé (C5, C6, C7, C8) comprend un unique canal radiofréquence (31, 32, 33, 34 respectivement), dans un réseau de transmission multicanaux selon la forme probable de la norme 802.11ac à venir, mettant en oeuvre quatre canaux radiofréquence au niveau de la couche PHY et une agrégation de type A-MPDU au niveau de la couche MAC, comme décrit en relation avec les figures 3 (art antérieur) et 5 (invention).

Plus précisément, les figures 6 et 7 illustrent le cas où les paquets agrégés sont modifiés pour présenter tous la même longueur.

En effet, les données à émettre devant au préalable être mises dans des files d'attente et prêtes à être expédiées dès que l'accès au canal primaire est acquis, on ne dispose pas de temps pour les re-séquencer pour essayer de trouver un agencement optimal. Or, les normes actuelles imposent que l'on ait le même entête PHY sur tous les canaux radiofréquence d'un canal concaténé. La longueur des trames à émettre sur chaque sous-canal concaténé indiquée dans l'entête PHY est donc la même pour tous les sous-canaux concaténés. Il peut donc s'avérer nécessaire de modifier les paquets agrégés pour qu'ils présentent tous la longueur définie dans l'entête PHY.

Pour ce faire, il est possible, comme illustré en figure 6, d'ajouter une séquence particulière comme une séquence de bourrage, notée MAC Pad pour « padding », après le champ FCS du dernier paquet de données d'un paquet agrégé.

Ainsi, une séquence MAC Pad 61 a été ajoutée à la suite du paquet de données MPDU1, une séquence MAC Pad 62 a été ajoutée à la suite du paquet de données MPDU2, et une séquence MAC Pad 63 a été ajoutée à la suite du paquet de données MPDU5. De cette façon, les paquets agrégés A-MPDU1 (formé du paquet de données MPDU1 et de la séquence MAC Pad 61), A-MPDU2 (formé du paquet de données MPDU2 et de la séquence MAC Pad 62), A-MPDU3 (formé des paquets de données MPDU3 et MPDU4), et A-MPDU4 (formé du paquet de données MPDU5 et de la séquence MAC Pad 63) présentent tous une longueur identique.

Cette première solution, bien que coûteuse en termes de ressource du fait de l'utilisation de séquences de bourrage, peut facilement être mise en oeuvre lorsque l'on insère une séquence particulière facilement reconnaissable au niveau MAC.

Il est aussi possible, comme illustré en figure 7, de découper un paquet de données en au moins deux nouveaux paquets de données, dits paquets fragmentés, et de répartir les paquets fragmentés dans au moins deux paquets agrégés distincts. Par exemple, le paquet de données MPDU4 peut être « fragmenté » en deux paquets fragmentés notés MPDU4.1 et MPDU4.2. De cette façon, les paquets agrégés A-MPDU1 (formé du paquet de données MPDU1 et d'une séquence MAC Pad), A-MPDU2 (formé du paquet de données MPDU2), A-MPDU3 (formé du paquet de données MPDU3 et du paquet fragmenté MPDU4.1), et A-MPDU4 (formé du paquet fragmenté MPDU4.2 et du paquet de données MPDU5) présentent tous une longueur identique.

Cette fragmentation permet de faciliter l'agencement des paquets agrégés.

On note que dans la mesure où ces paquets fragmentés peuvent être renvoyés de manière indépendante selon les besoins, puisqu'ils comprennent chacun un entête MAC, une unité de données de service MAC, et une séquence de contrôle d'intégrité FCS, cette réorganisation peut être avantageuse. On note que cette fragmentation d'un paquet de données MPDU4 en deux paquets fragmentés MPDU4.1 et MPDU 4.2 nécessite la génération d'un entête MAC et d'une séquence de contrôle d'intégrité supplémentaires, ce qui implique une perte de débit (« overhead ») en transmission. Toutefois, si une erreur survient sur l'un ou l'autre de ces paquets fragmentés, il est aisé d'identifier le paquet fragmenté corrompu grâce à un mécanisme de contrôle à redondance cyclique CRC (« Cyclic Redundancy Code »), et de reémettre uniquement le paquet agrégé comprenant ce paquet fragmenté (sur requête du récepteur), ou uniquement le paquet fragmenté, plutôt que l'ensemble des paquets agrégés, ce qui offre un bon compromis.

Cette technique permet également de limiter l'utilisation de séquence de bourrage pour générer des paquets agrégés de même longueur, ce qui permet de limiter la perte de débit.

On note que cette deuxième solution peut être combinée à la première solution, comme illustré en figure 7 pour le paquet agrégé A-MPDU1.

On constate sur ces différents exemples que les trames envoyées dans un même canal concaténé C ont toutes le même entête PHY, envoyé de manière synchrone. La technique proposée diffère donc de la technique d'accès multiple OFDMA permettant de transmettre des paquets de données vers des équipements destinataires distincts, et pour laquelle on utilise des porteuses distinctes de la bande de fréquence pour chacun des équipements destinataires en signalant à chaque équipement destinataire les porteuses qui le concerne.

De manière imagée, on pourrait considérer que l'agrégation selon l'invention est une agrégation « horizontale » et non une agrégation « verticale » comme proposé dans l'état de la technique.

### 5.3 Exemples de signalisation

Afin qu'un équipement destinataire du réseau puisse recevoir et décoder les trames envoyées dans un canal concaténé, il est possible de l'informer de l'émission de différents paquets agrégés sur des sous-canaux concaténés distincts.

Pour ce faire, il est possible d'insérer un ou plusieurs nouveaux indicateurs, ou de modifier des indicateurs existants, dans les trames émises dans le canal concaténé.

Selon un premier exemple, il est possible d'insérer ou réutiliser un bit de l'entête PHY, et plus précisément de l'entête PLCP d'un champ de signalisation (en anglais « Physical Layer Convergence Procédure » en français « Procédure de convergence de la couche physique »), indiquant l'émission de paquets agrégés respectivement sur des sous-canaux concaténés distincts, ou que les traitements sont à séparer. Un tel champ de signalisation est par exemple le champ VHT-SIG défini dans les nouvelles versions 802.11ac et 802.11ad de la norme Wifi. Il est également possible d'ajouter des bits (par exemple 1, 2, 3 ou 4, selon la largeur de bande du canal concaténé) pour indiquer la configuration utilisée pour le cloisonnement, c'est-à-dire pour indiquer le nombre de sous-canaux concaténés (en codant le paramètre N par exemple).

Selon un deuxième exemple, il est possible d'insérer un bit dans une balise (« beacon »), indiquant l'émission, dans l'ensemble de services de base BSS, de paquets agrégés respectivement sur des sous-canaux concaténés distincts. Il est également possible d'ajouter des bits (par exemple 1, 2, 3 ou 4, selon la largeur de bande du canal concaténé) pour indiquer la configuration utilisée pour le cloisonnement, c'est-à-dire pour indiquer le nombre de sous-canaux concaténés (en codant le paramètre N par exemple).

Il est également possible qu'un équipement destinataire soit directement conçu pour recevoir des trames transmises selon l'invention, auquel cas il n'est pas nécessaire de l'informer de l'émission de paquets agrégés respectivement sur des sous-canaux concaténés distincts.

Selon une variante, un tel équipement destinataire peut savoir, en fonction de la largeur de bande, s'il doit traiter les trames reçues de manière classique (lorsque les paquets agrégés ont été étalés sur l'ensemble du canal concaténé, comme illustré en figure 3), ou s'il doit adapter son traitement (lorsque les paquets agrégés ont été émis sur des sous-canaux concaténés distincts). Ainsi, un tel équipement fonctionne de manière classique (agrégation « verticale ») pour certaines largeurs de bande (par exemple 20MHz ou 40MHz) et de manière nouvelle (agrégation « horizontale ») pour d'autres largeurs de bande (par exemple 60MHz, 80MHz ou plus).

De manière préférentielle, le « mapping » des canaux utilisés doit également être signalé : on indique ainsi quels canaux radiofréquence forment le canal concaténé, et/ou quels canaux radiofréquence forment les sous-canaux concaténés du canal concaténé.

Il est également souhaitable de signaler le nombre de canaux radiofréquence occupés par chaque paquet agrégé (correspondant à une granularité « verticale »). Par exemple, au vu de la figure 5, chaque paquet agrégé occupe deux canaux radiofréquence (le canal primaire 31 et le canal secondaire 32 pour le paquet agrégé A-MPDU1, le canal tertiaire 33 et le canal quaternaire 34 pour le paquet agrégé A-MPDU2). Si on considère des canaux radiofréquence présentant chacun une largeur de bande de 20MHz, on peut choisir d'indiquer la largeur de bande occupée par chaque paquet agrégé : 20MHz, 40MHz, etc.

On note que dans le cas de configurations particulières, comme pour un canal concaténé présentant une largeur de bande de 60MHz, il est possible d'étaler certains paquets agrégés sur 40MHz et d'autres sur les 20MHz restant. Il est donc préférable d'indiquer, pour chaque paquet agrégé, le nombre de canaux radiofréquence que ce paquet agrégé occupe (dans l'entête PHY ou dans une balise).

### 5.4 Réception : principales étapes

On présente désormais en relation avec la figure 8 les principales étapes mises en oeuvre par la technique de réception de paquets agrégés selon un mode de réalisation de l'invention.

On considère pour ce faire un réseau de communication tel que défini précédemment, utilisant une pluralité de canaux radiofréquence, au moins deux des canaux radiofréquence étant concaténés pour former un canal concaténé. Ce réseau est organisé en une pluralité de couches de communication comprenant une couche liaison de données, dite couche MAC, et une couche physique, dite couche PHY.

Plus précisément, cette technique de réception de paquets agrégés met en oeuvre les étapes suivantes :
- réception (81) d'au moins deux paquets agrégés respectivement sur au moins deux sous-canaux concaténés distincts, un sous-canal concaténé étant formé par au moins un des canaux radiofréquence du canal concaténé,
   lesdits paquets agrégés, auxquels est associé un entête unique de la couche PHY, résultant d'une agrégation de paquets de données à transmettre vers un même destinataire, mise en oeuvre au niveau de la couche MAC avant émission ;
- pour au moins un paquet agrégé A-MPDU*i*, extraction (et interprétation) (82) du ou des paquets de données formant le paquet agrégé.

Ces différentes étapes peuvent être mises en oeuvre de diverses manières, notamment sous forme câblée ou sous forme logicielle.

Elles peuvent être effectuées par un équipement destinataire, une fois que cet équipement a détecté une émission simultanée de paquets agrégés sur des sous-canaux concaténés distincts.

Pour ce faire, le procédé de réception peut mettre en oeuvre une étape préalable de lecture d'au moins un indicateur d'émission simultanée ou de traitement parallèle, tel que décrit précédemment. Ce ou ces indicateurs peuvent être lu dans l'entête PLCP ou dans une balise des trames reçues. Selon une variante, l'équipement destinataire met systématiquement en oeuvre les étapes de réception (81) et d'extraction (82), quelle que soit la largeur de bande du canal concaténé, ou uniquement pour un canal concaténé présentant une grande largeur de bande, par exemple supérieure ou égale à 60MHz.

Si une ou plusieurs séquences de bourrage ont été introduites par l'équipement de transmission, comme illustré en figure 6, il est possible de les supprimer, au niveau de la couche MAC, avant d'extraire le ou les paquets de données.

De même, si un (ou plusieurs) paquet de données a été découpé en plusieurs paquets fragmentés transmis sur plusieurs sous-canaux concaténés distincts après agrégation, comme illustré en figure 7, il est nécessaire de décoder les paquets agrégés associés à tous ces sous-canaux concaténés distincts pour pouvoir reconstruire le paquet de données d'origine. Par exemple, en reprenant la figure 7, il faut décoder les paquets agrégés A-MPDU3 et A-MPDU-4 pour pourvoir reconstruire le paquet de données d'origine MPDU4.

Ces étapes de suppression de séquences de bourrage ou de reconstruction de paquets de données peuvent être mises en oeuvre, au niveau de la couche MAC, à la réception d'un indicateur spécifique, ou automatiquement mises en oeuvre suite à la détection, par l'équipement destinataire, d'une séquence de bourrage ou de paquets fragmentés.

### 5.5 Equipement de transmission et équipement destinataire

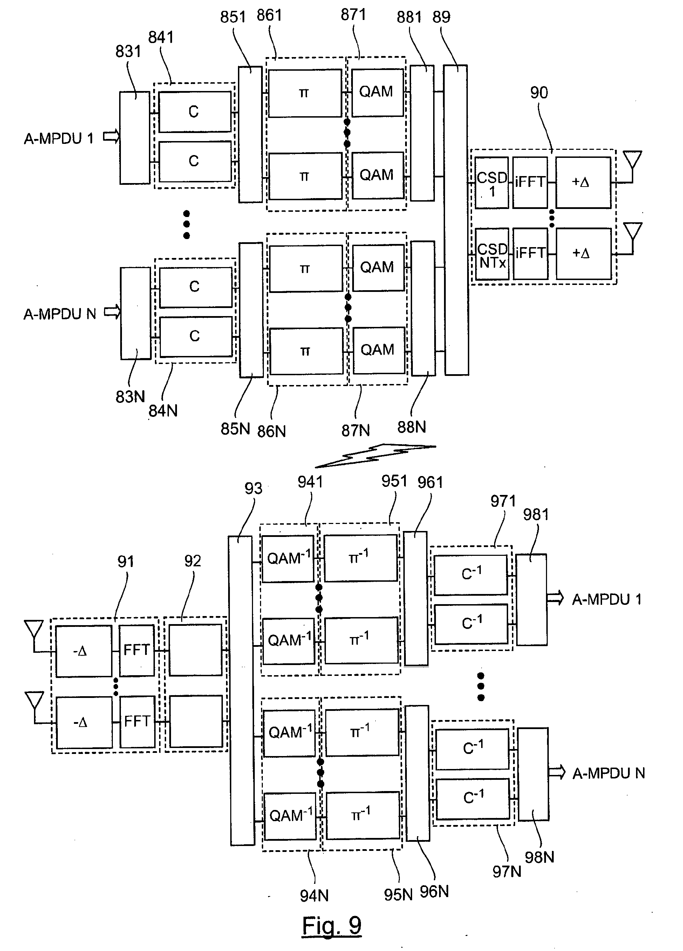

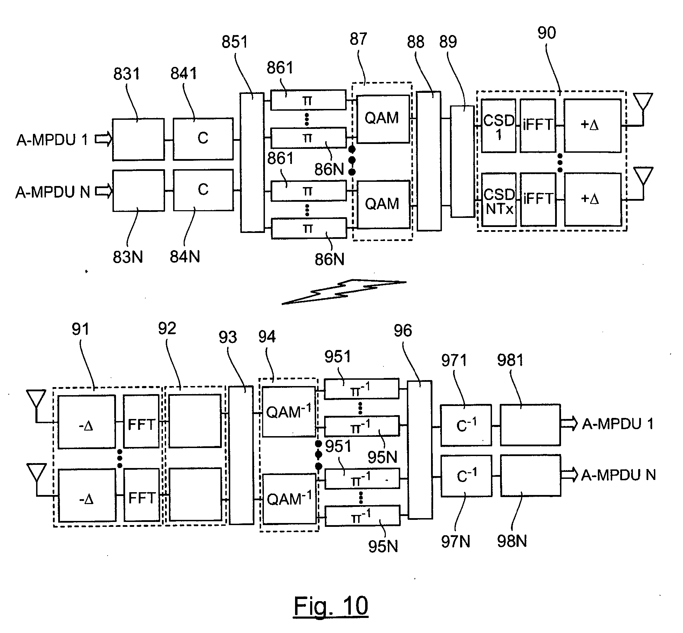

On présente désormais, en relation avec les figures 9 et 10, les modifications de la couche PHY permettant de transmettre les N paquets agrégés simultanément sur l'ensemble de la bande de fréquence disponible, chaque paquet agrégé étant transmis dans un sous-canal concaténé distinct. On rappelle en effet que l'invention propose :
- de modifier l'agrégation en couche MAC en prenant en compte un paramètre N correspondant au nombre de sous-canaux concaténés, afin de fournir N paquets agrégés au lieu d'un seul paquet agrégé, et
- de modifier la couche PHY afin de transmettre ces N paquets agrégés simultanément sur l'ensemble de la bande de fréquence disponible (correspondant au canal concaténé).

On rappelle que, classiquement, la couche MAC délivre des paquets de données à la couche PHY. Le parallélisme des agrégations proposé au niveau de la couche MAC (correspondant à la prise en compte de sous-canaux concaténés) a donc également des répercussions au niveau de la couche PHY.

Ainsi, un équipement de transmission comprend des moyens d'agrégation de paquets de données à transmettre vers un même destinataire, délivrant au moins deux paquets agrégés, mis en oeuvre au niveau de la couche MAC, et des moyens d'émission simultanée desdits au moins deux paquets agrégés respectivement sur au moins deux sous-canaux concaténés distincts, mis en oeuvre au niveau de la couche PHY.

Un équipement destinataire comprend quant à lui des moyens de réception d'au moins deux paquets agrégés respectivement sur au moins deux sous-canaux concaténés distincts, mis en oeuvre au niveau de la couche PHY et pour au moins un paquet agrégé, des moyens d'extraction (et d'interprétation) du ou desdits paquets de données formant le paquet agrégé, mis en oeuvre au niveau de la couche MAC.

Du fait d'une transmission sur plusieurs sous-canaux concaténés, il y a une parallélisation du traitement du signal. Ceci correspond, au niveau de la couche PHY, à avoir une duplication d'une partie des chaînes d'émission et de réception (embrouilleur/désembrouilleur, codeurs/décodeurs et entrelaceurs/desentrelaceurs) permettant d'avoir des traitements indépendants et parallèles.

Dans le cadre d'une transmission MIMO mettant en oeuvre une modulation OFDM, comme illustré en figure 9, on utilise côté émission un ensemble de modules spécifiques à chaque sous-canal concaténé.

Par exemple, le premier paquet agrégé A-MPDU1 est émis sur un premier sous-canal concaténé C1 en utilisant :
- des modules spécifiques à ce premier sous-canal concaténé : embrouilleur 831, codeur canal 841, répartiteur de flux (en anglais « spatial stream parsing ») 851, entrelaceur 861, codeur binaire à symbole 871 (mettant par exemple en oeuvre une modulation d'amplitude en quadrature QAM), codeur espace/temps 881 ;
- des modules communs à l'ensemble des sous-canaux concaténés : traitement du signal MIMO 89, modulateur OFDM 90 (diversité par rotation cyclique du symbole émis - en anglais CSD pour « Cyclic Shift Diversity » , transformation de Fourier inverse et insertion d'un intervalle de garde Δ).

Le N-ième paquet agrégé A-MPDUN est quant à lui émis sur le N-ième sous-canal concaténé CN en utilisant :
- des modules spécifiques à ce N-ième sous-canal concaténé : embrouilleur 83N, codeur canal 84N, répartiteur de flux 85N, entrelaceur 86N, codeur binaire à symbole 87N, codeur espace/temps 88N ;
- les modules communs à l'ensemble des sous-canaux concaténés listés précédemment.

On utilise donc autant de « branches » spécifiques que de sous-canaux concaténés.

De la même façon, on utilise côté réception un ensemble de modules spécifiques à chaque sous-canal concaténé.

Certains modules sont communs à l'ensemble des sous-canaux concaténés : démodulateur OFDM 91 (suppression de l'intervalle de garde et transformation de Fourier), estimateur de canal 92, et égaliseur MIMO 93 .

D'autres sont spécifiques à chaque sous-canal concaténé :
- pour le premier sous-canal concaténé C1 : détecteur binaire à symbole 941, désentrelaceur 951, répartiteur inverse de flux (en anglais «spatial stream deparsing ») 961, décodeur canal 971, désembrouilleur 981 ;
- pour le N-ième sous-canal concaténé CN : détecteur binaire à symbole 94N, désentrelaceur 95N, répartiteur inverse de flux 96N, décodeur canal 97N_{;} désembrouilleur 98N.

A nouveau, on utilise autant de « branches » spécifiques que de sous-canaux concaténés.

En particulier, on note que ces modules, pris isolément, sont bien connus de l'état de la technique. Par conséquent, leur fonctionnement n'est pas décrit ici.

Selon une variante, certains modules communs aux différentes branches sont mutualisés. On simplifie de cette façon la chaîne d'émission/réception en supprimant la redondance de certaines fonctions.

On obtient ainsi un système optimisé au niveau de la réutilisation des ressources, comme illustré en figure 10.

Par exemple, côté émission, les modules de répartition de flux 85, de codage binaire à symbole 87 et de codage espace/temps 88 sont mutualisés. Les autres modules d'embrouillage (831, 83N), codage canal (841, 84N) et entrelacement (861, 86N) restent spécifiques à chaque sous-canal concaténé.

De la même façon, côté réception, les modules de détection binaire à symbole 94 et répartition inverse de flux 96 sont mutualisés. Les autres modules de désentrelacement (951, 95N), décodage canal (971, 97N), et désembrouillage (981, 98N) restent spécifiques à chaque sous-canal concaténé.

Bien entendu, d'autres structures d'un équipement de transmission ou d'un équipement destinataire selon l'invention peuvent être envisagées, sans sortir du cadre de l'invention.

## Revendications

1. Procédé de transmission de paquets de données dans un réseau de communication utilisant une pluralité de canaux radiofréquence (31 à 34),
ledit réseau de communication étant organisé en une pluralité de couches de communication comprenant une couche liaison de données, dite couche MAC, et une couche physique, dite couche PHY,
ledit procédé mettant en oeuvre, au niveau de ladite couche MAC, une étape d'agrégation (41) de paquets de données à transmettre vers un même destinataire (MPDU1 à MPDU5), délivrant au moins deux paquets agrégés (A-MPDU1, A-MPDU2), auxquels est associé un entête unique de ladite couche PHY (H_PHY),
au moins deux desdits canaux radiofréquence étant concaténés pour former un canal concaténé (C), **caractérisé en ce qu'**il met en oeuvre une étape d'émission simultanée (42) desdits au moins deux paquets agrégés (A-MPDU1, A-MPDU2) respectivement sur au moins deux sous-canaux concaténés distincts (C1, C2), un sous-canal concaténé (C1, C2) étant formé par au moins un desdits canaux radiofréquence (31 à 34) dudit canal concaténé (C).

2. Procédé de transmission selon la revendication 1, **caractérisé en ce que**, préalablement à ladite étape d'émission (42), ledit entête unique de ladite couche PHY est transmis de façon synchrone sur chacun desdits canaux radiofréquence (31 à 34) formant ledit canal concaténé (C).

3. Procédé de transmission selon la revendication 1, **caractérisé en ce qu'**il comprend une étape de signalisation de l'émission simultanée desdits paquets agrégés (A-MPDU1, A-MPDU2) sur lesdits sous-canaux concaténés (C1, C2).

4. Procédé de transmission selon la revendication 3, **caractérisé en ce que** ladite étape de signalisation signale au moins une des informations suivantes :
- nombre de sous-canaux concaténés (C1, C2) dans ledit canal concaténé (C) ;
- canaux radiofréquence (31 à 34) formant chacun desdits sous-canaux concaténés (C1, C2) ;
- nombre de canaux radiofréquence (31 à 34) occupés par chaque paquet agrégé ;
- type d'agrégation mis en oeuvre.

5. Procédé de transmission selon la revendication 1, **caractérisé en ce qu'**il comprend une étape d'insertion d'une séquence de bourrage après le dernier paquet de données d'au moins un paquet agrégé, de façon que chaque paquet agrégé émis lors de ladite étape d'émission présente une longueur identique.

6. Procédé de transmission selon la revendication 1, **caractérisé en ce qu'**il comprend une étape de découpage d'un paquet de données en au moins deux nouveaux paquets de données, dits paquets fragmentés, et ladite étape d'agrégation répartit lesdits paquets fragmentés dans au moins deux paquets agrégés distincts.

7. Equipement de transmission de paquets de données dans un réseau de communication utilisant une pluralité de canaux radiofréquence (31 à 34),
ledit réseau de communication étant organisé en une pluralité de couches de communication comprenant une couche liaison de données, dite couche MAC, et une couche physique, dite couche PHY,
ledit équipement comprenant des moyens d'agrégation (41) de paquets de données à transmettre vers un même destinataire (MPDU1 à MPDU5), mis en oeuvre au niveau de ladite couche MAC, délivrant au moins deux paquets agrégés (A-MPDU1, A-MPDU2), auxquels est associé un entête unique de ladite couche PHY,
au moins deux desdits canaux radiofréquence étant concaténés pour former un canal concaténé, **caractérisé en ce qu'**il comprend également des moyens d'émission simultanée desdits au moins deux paquets agrégés (A-MPDU1, A-MPDU2) respectivement sur au moins deux sous-canaux concaténés distincts (C1, C2), un sous-canal concaténé (C1, C2) étant formé par au moins un desdits canaux radiofréquence (31 à 34) dudit canal concaténé (C).

8. Procédé de réception de paquets agrégés dans un réseau de communication utilisant une pluralité de canaux radiofréquence (31 à 34),
ledit réseau de communication étant organisé en une pluralité de couches de communication comprenant une couche liaison de données, dite couche MAC, et une couche physique, dite couche PHY,
au moins deux desdits canaux radiofréquence étant concaténés pour former un canal concaténé, **caractérisé en ce qu'**il met en oeuvre les étapes suivantes :
- réception (81) d'au moins deux paquets agrégés (A-MPDU1, A-MPDU2) respectivement sur au moins deux sous-canaux concaténés distincts (C1, C2), un sous-canal concaténé étant formé par au moins un desdits canaux radiofréquence dudit canal concaténé,
lesdits paquets agrégés, auxquels est associé un entête unique de ladite couche PHY, résultant d'une agrégation de paquets de données à transmettre vers un même destinataire, mise en oeuvre au niveau de ladite couche MAC avant émission,
- pour au moins un paquet agrégé, extraction (82) du ou desdits paquets de données formant ledit paquet agrégé.

9. Equipement destinataire destiné à recevoir des paquets agrégés dans un réseau de communication utilisant une pluralité de canaux radiofréquence (31 à 34),
ledit réseau de communication étant organisé en une pluralité de couches de communication comprenant une couche liaison de données, dite couche MAC, et une couche physique, dite couche PHY,
au moins deux desdits canaux radiofréquence (31 à 34) étant concaténés pour former un canal concaténé (C),
**caractérisé en ce qu'**il comprend :
- des moyens de réception (81) d'au moins deux paquets agrégés (A-MPDU1, A-MPDU2) respectivement sur au moins deux sous-canaux concaténés distincts (C1, C2), un sous-canal concaténé (C1, C2) étant formé par au moins un desdits canaux radiofréquence (31 à 34) dudit canal concaténé (C),
lesdits paquets agrégés, auxquels est associé un entête unique de ladite couche PHY, résultant d'une agrégation de paquets de données à transmettre vers un même destinataire, mise en oeuvre au niveau de ladite couche MAC avant émission ;
- pour au moins un paquet agrégé, des moyens d'extraction (82) du ou desdits paquets de données formant ledit paquet agrégé.

10. Signal multiporteuse émis dans un réseau de communication utilisant une pluralité de canaux radiofréquence (31 à 34),
ledit réseau de communication étant organisé en une pluralité de couches de communication comprenant une couche liaison de données, dite couche MAC, et une couche physique, dite couche PHY,
au moins deux desdits canaux radiofréquence (31 à 34) étant concaténés pour former un canal concaténé (C),
**caractérisé en ce que** ledit signal transporte :
- des données associées à un paquet agrégé (A-MPDU1), sur des porteuses appartenant à un premier sous-canal concaténé (C1), et
- des données associées à au moins un paquet agrégé distinct (A-MPDU2), sur des porteuses
appartenant à au moins un deuxième sous-canal concaténé (C2),
un sous-canal concaténé (C1, C2) étant formé par au moins un desdits canaux radiofréquence (31 à 34) dudit canal concaténé (C), et
lesdits paquets agrégés (A-MPDU1, A-MPDU2), auxquels est associé un entête unique de ladite couche PHY, résultant d'une agrégation de paquets de données à transmettre vers un même destinataire, mise en oeuvre au niveau de ladite couche MAC avant émission.

11. Programme d'ordinateur comportant des instructions pour la mise en oeuvre d'un procédé selon la revendication 1 ou selon la revendication 8 lorsque ce programme est exécuté par un processeur.

## Patentansprüche

1. Verfahren zur Übertragung von Datenpaketen in einem Kommunikationsnetz, das mehrere Funkkanäle (31 bis 34) verwendet,
wobei das Kommunikationsnetz in mehreren Kommunikationsschichten organisiert ist, welche eine Sicherungsschicht, MAC-Schicht genannt, und eine physikalische Schicht, PHY-Schicht genannt, aufweisen,
wobei das Verfahren auf der Ebene der MAC-Schicht einen Schritt der Aggregation (41) von zu ein und demselben Empfänger zu übertragenden Datenpaketen (MPDU1 bis MPDU5) durchführt, der mindestens zwei aggregierte Pakete (A-MPDU1, A-MPDU2) liefert, welchen ein eindeutiger Header der PHY-Schicht (H_PHY) zugeordnet ist,
wobei mindestens zwei der Funkkanäle verkettet sind, so dass sie einen verketteten Kanal (C) bilden,
**dadurch gekennzeichnet, dass** es einen Schritt des gleichzeitigen Sendens (42) der mindestens zwei aggregierten Pakete (A-MPDU1, A-MPDU2) auf entsprechenden mindestens zwei verschiedenen verketteten Unterkanälen (C1, C2) durchführt, wobei ein verketteter Unterkanal (C1, C2) von mindestens einem der Funkkanäle (31 bis 34) des verketteten Kanals (C) gebildet wird.

2. Übertragungsverfahren nach Anspruch 1, **dadurch gekennzeichnet, dass** vor dem Schritt des Sendens (42) der eindeutige Header der PHY-Schicht auf synchrone Weise auf jedem der Funkkanäle (31 bis 34) übertragen wird, die den verketteten Kanal (C) bilden.

3. Übertragungsverfahren nach Anspruch 1, **dadurch gekennzeichnet, dass** es einen Schritt der Signalisierung des gleichzeitigen Sendens der aggregierten Pakete (A-MPDU1, A-MPDU2) auf den verketteten Unterkanälen (C1, C2) aufweist.

4. Übertragungsverfahren nach Anspruch 3, **dadurch gekennzeichnet, dass** in dem Schritt der Signalisierung mindestens eine der folgenden Informationen angegeben wird:
- Anzahl der verketteten Unterkanäle (C1, C2) in dem verketteten Kanal (C);
- Funkkanäle (31 bis 34), welche die einzelnen verketteten Unterkanäle (C1, C2) bilden;
- Anzahl der Funkkanäle (31 bis 34), die durch jedes aggregierte Paket belegt werden;
- angewandter Typ der Aggregation.

5. Übertragungsverfahren nach Anspruch 1, **dadurch gekennzeichnet, dass** es einen Schritt des Einfügens einer Füllsequenz nach dem letzten Datenpaket mindestens eines aggregierten Pakets aufweist, derart, dass alle aggregierten Pakete, die im Schritt des Sendens gesendet werden, ein und dieselbe Länge aufweisen.

6. Übertragungsverfahren nach Anspruch 1, **dadurch gekennzeichnet, dass** es einen Schritt des Aufteilens eines Datenpakets in mindestens zwei neue Datenpakete, fragmentierte Pakete genannt, aufweist und im Schritt der Aggregation die fragmentierten Pakete auf mindestens zwei verschiedene aggregierte Pakete verteilt werden.

7. Einrichtung zur Übertragung von Datenpaketen in einem Kommunikationsnetz, das mehrere Funkkanäle (31 bis 34) verwendet,
wobei das Kommunikationsnetz in mehreren Kommunikationsschichten organisiert ist, welche eine Sicherungsschicht, MAC-Schicht genannt, und eine physikalische Schicht, PHY-Schicht genannt, aufweisen,
wobei die Einrichtung Mittel zur Aggregation (41) von zu ein und demselben Empfänger zu übertragenden Datenpaketen (MPDU1 bis MPDU5) aufweist, die auf der Ebene der MAC-Schicht durchgeführt wird und mindestens zwei aggregierte Pakete (A-MPDU1, A-MPDU2) liefert, welchen ein eindeutiger Header der PHY-Schicht (H_PHY) zugeordnet ist,
wobei mindestens zwei der Funkkanäle verkettet sind, so dass sie einen verketteten Kanal bilden,
**dadurch gekennzeichnet, dass** sie außerdem Mittel zum gleichzeitigen Senden der mindestens zwei aggregierten Pakete (A-MPDU1, A-MPDU2) auf entsprechenden mindestens zwei verschiedenen verketteten Unterkanälen (C1, C2) aufweist, wobei ein verketteter Unterkanal (C1, C2) von mindestens einem der Funkkanäle (31 bis 34) des verketteten Kanals (C) gebildet wird.

8. Verfahren zum Empfang von aggregierten Paketen in einem Kommunikationsnetz, das mehrere Funkkanäle (31 bis 34) verwendet,
wobei das Kommunikationsnetz in mehreren Kommunikationsschichten organisiert ist, welche eine Sicherungsschicht, MAC-Schicht genannt, und eine physikalische Schicht, PHY-Schicht genannt, aufweisen,
wobei mindestens zwei der Funkkanäle verkettet sind, so dass sie einen verketteten Kanal bilden,
**dadurch gekennzeichnet, dass** es die folgenden Schritte durchführt:
- Empfang (81) von mindestens zwei aggregierten Paketen (A-MPDU1, A-MPDU2) auf entsprechenden mindestens zwei verschiedenen verketteten Unterkanälen (C1, C2), wobei ein verketteter Unterkanal von mindestens einem der Funkkanäle des verketteten Kanals gebildet wird,
wobei die aggregierten Pakete, denen ein eindeutiger Header der PHY-Schicht zugeordnet ist, aus einer Aggregation von zu ein und demselben Empfänger zu übertragenden Datenpaketen resultieren, die auf der Ebene der MAC-Schicht vor dem Senden durchgeführt wird,
- für mindestens ein aggregiertes Paket, Extraktion (82) des oder der Datenpakete, die das aggregierte Paket bilden.

9. Empfängereinrichtung, die dazu bestimmt ist, aggregierte Pakete in einem Kommunikationsnetz, das mehrere Funkkanäle (31 bis 34) verwendet, zu empfangen,
wobei das Kommunikationsnetz in mehreren Kommunikationsschichten organisiert ist, welche eine Sicherungsschicht, MAC-Schicht genannt, und eine physikalische Schicht, PHY-Schicht genannt, aufweisen,
wobei mindestens zwei der Funkkanäle (31 bis 34) verkettet sind, so dass sie einen verketteten Kanal (C) bilden,
**dadurch gekennzeichnet, dass** sie aufweist:
- Mittel zum Empfang (81) von mindestens zwei aggregierten Paketen (A-MPDU1, A-MPDU2) auf entsprechenden mindestens zwei verschiedenen verketteten Unterkanälen (C1, C2), wobei ein verketteter Unterkanal (C1, C2) von mindestens einem der Funkkanäle (31 bis 34) des verketteten Kanals (C) gebildet wird,
wobei die aggregierten Pakete, denen ein eindeutiger Header der PHY-Schicht zugeordnet ist, aus einer Aggregation von zu ein und demselben Empfänger zu übertragenden Datenpaketen resultieren, die auf der Ebene der MAC-Schicht vor dem Senden durchgeführt wird;
- für mindestens ein aggregiertes Paket, Mittel zur Extraktion (82) des oder der Datenpakete, die das aggregierte Paket bilden.

10. Mehrträgersignal, das in einem Kommunikationsnetz gesendet wird, das mehrere Funkkanäle (31 bis 34) verwendet,
wobei das Kommunikationsnetz in mehreren Kommunikationsschichten organisiert ist, welche eine Sicherungsschicht, MAC-Schicht genannt, und eine physikalische Schicht, PHY-Schicht genannt, aufweisen,
wobei mindestens zwei der Funkkanäle (31 bis 34) verkettet sind, so dass sie einen verketteten Kanal (C) bilden,
**dadurch gekennzeichnet, dass** das Signal transportiert:
- Daten, die einem aggregierten Paket (A-MPDU1) zugeordnet sind, auf Trägern, die zu einem ersten verketteten Unterkanal (C1) gehören, und
- Daten, die mindestens einem weiteren aggregierten Paket (A-MPDU2) zugeordnet sind, auf Trägern, die zu mindestens einem zweiten verketteten Unterkanal (C2) gehören,
wobei ein verketteter Unterkanal (C1, C2) von mindestens einem der Funkkanäle (31 bis 34) des verketteten Kanals (C) gebildet wird, und
wobei die aggregierten Pakete (A-MPDU1, A-MPDU2), denen ein eindeutiger Header der PHY-Schicht zugeordnet ist, aus einer Aggregation von zu ein und demselben Empfänger zu übertragenden Datenpaketen resultieren, die auf der Ebene der MAC-Schicht vor dem Senden durchgeführt wird.

11. Computerprogramm, welches Anweisungen zur Durchführung eines Verfahrens nach Anspruch 1 oder nach Anspruch 8, wenn dieses Programm von einem Prozessor ausgeführt wird, aufweist.

## Claims

1. Method for transmitting data packets in a communication network using a plurality of radio frequency channels (31 to 34),
said communication network being organized into a plurality of communication layers comprising a data link layer, called MAC layer, and a physical layer, called PHY layer,
said method implementing, at the level of said MAC layer, a step of aggregating (41) data packets to be transmitted to one and the same addressee (MPDU1 to MPDU5), delivering at least two aggregated packets (A-MPDU1, A-MPDU2), with which a unique header from said PHY layer (H_PHY) is associated,
at least two of said radio frequency channels being concatenated to form a concatenated channel (C),
**characterized in that** it implements a step of simultaneously emitting (42) said at least two aggregated packets (A-MPDU1, A-MPDU2) respectively over at least two separate concatenated sub-channels (C1, C2), a concatenated sub-channel (C1, C2) being formed by at least one of said radio frequency channels (31 to 34) of said concatenated channel (C).

2. Method of transmission according to Claim 1, **characterized in that**, prior to said emitting step (42), said unique header from said PHY layer is transmitted synchronously over each of said radio frequency channels (31 to 34) forming said concatenated channel (C).

3. Method of transmission according to Claim 1, **characterized in that** it comprises a step of signalling the simultaneous emission of said aggregated packets (A-MPDU1, A-MPDU2) over said concatenated sub-channels (C1, C2).

4. Method of transmission according to Claim 3, **characterized in that** said signalling step signals at least one of the following items of information:
- number of concatenated sub-channels (C1, C2) in said concatenated channel (C);
- radio frequency channels (31 to 34) forming each of said concatenated sub-channels (C1, C2);
- number of radio frequency channels (31 to 34) occupied by each aggregated packet;
- type of aggregation implemented.

5. Method of transmission according to Claim 1, **characterized in that** it comprises a step of inserting a stuffing sequence after the last data packet of at least one aggregated packet, in such a way that each aggregated packet emitted during said emitting step has an identical length.

6. Method of transmission according to Claim 1, **characterized in that** it comprises a step of dividing a data packet into at least two new data packets, called fragmented packets, and said aggregating step distributes said fragmented packets into at least two separate aggregated packets.

7. Device for transmitting data packets in a communication network using a plurality of radio frequency channels (31 to 34),
said communication network being organized into a plurality of communication layers comprising a data link layer, called MAC layer, and a physical layer, called PHY layer,
said device comprising means for aggregating (41) data packets to be transmitted to one and the same addressee (MPDU1 to MPDU5), implemented at the level of said MAC layer, delivering at least two aggregated packets (A-MPDU1, A-MPDU2), with which a unique header from said PHY layer is associated,
at least two of said radio frequency channels being concatenated to form a concatenated channel,
**characterized in that** it also comprises means for simultaneously emitting said at least two aggregated packets (A-MPDU1, A-MPDU2) respectively over at least two separate concatenated sub-channels (C1, C2), a concatenated sub-channel (C1, C2) being formed by at least one of said radio frequency channels (31 to 34) of said concatenated channel (C).

8. Method for receiving aggregated packets in a communication network using a plurality of radio frequency channels (31 to 34),
said communication network being organized into a plurality of communication layers comprising a data link layer, called MAC layer, and a physical layer, called PHY layer,
at least two of said radio frequency channels being concatenated to form a concatenated channel,
**characterized in that** it implements the following steps:
- receiving (81) at least two aggregated packets (A-MPDU1, A-MPDU2) respectively over at least two separate concatenated sub-channels (C1, C2), a concatenated sub-channel being formed by at least one of said radio frequency channels of said concatenated channel, said aggregated packets, with which a unique header from said PHY layer is associated, resulting from an aggregation of data packets to be transmitted to one and the same addressee, implemented at the level of said MAC layer before emission,
- for at least one aggregated packet, extracting (82) said data packet or packets forming said aggregated packet.

9. Addressee device intended to receive aggregated packets in a communication network using a plurality of radio frequency channels (31 to 34),
said communication network being organized into a plurality of communication layers comprising a data link layer, called MAC layer, and a physical layer, called PHY layer,
at least two of said radio frequency channels (31 to 34) being concatenated to form a concatenated channel (C),
**characterized in that** it comprises:
- means for receiving (81) at least two aggregated packets (A-MPDU1, A-MPDU2) respectively over at least two separate concatenated sub-channels (C1, C2), a concatenated sub-channel (C1, C2) being formed by at least one of said radio frequency channels (31 to 34) of said concatenated channel (C),
said aggregated packets, with which a unique header from said PHY layer is associated, resulting from an aggregation of data packets to be transmitted to one and the same addressee, implemented at the level of said MAC layer before emission;
- for at least one aggregated packet, means for extracting (82) said data packet or packets forming said aggregated packet.

10. Multi-carrier signal emitted in a communication network using a plurality of radio frequency channels (31 to 34),
said communication network being organized into a plurality of communication layers comprising a data link layer, called MAC layer, and a physical layer, called PHY layer,
at least two of said radio frequency channels (31 to 34) being concatenated to form a concatenated channel (C),
**characterized in that** said signal transports:
- data associated with an aggregated packet (A-MPDU1), over carriers belonging to a first concatenated sub-channel (C1), and
- data associated with at least one separate aggregated packet (A-MPDU2), over carriers belonging to at least one second concatenated sub-channel (C2),
a concatenated sub-channel (C1, C2) being formed by at least one of said radio frequency channels (31 to 34) of said concatenated channel (C), and said aggregated packets (A-MPDU1, A-MPDU2), with which a unique header from said PHY layer is associated, resulting from an aggregation of data packets to be transmitted to one and the same addressee, implemented at the level of said MAC layer before emission.

11. Computer program containing instructions for the implementation of a method according to Claim 1 or according to Claim 8 when this program is executed by a processor.
